# EUROPÄISCHE PATENTSCHRIFT

(11) **EP 3 077 268 B1**
(45) Veröffentlichungstag und Bekanntmachung des Hinweises auf die Patenterteilung: **26.12.2018**
(21) Anmeldenummer: 15700535.6
(22) Anmeldetag: 07.01.2015
(51) Int. Cl.: B61K 9/08, B61K 9/12, B61L 15/00

(54) **SCHIENENFAHRZEUG**
RAIL VEHICLE
VÉHICULE FERROVIAIRE

(30) Priorität: 31.01.2014 DE 102014201729
(43) Veröffentlichungstag der Anmeldung: 12.10.2016
(73) Patentinhaber: Siemens Mobility GmbH, 81739 München (DE)
(72) Erfinder: VON FLOTTWELL, Edward, 47829 Krefeld (DE)
(86) Internationale Anmeldenummer: PCT/EP2015/050151
(87) Internationale Veröffentlichungsnummer: WO 2015/113787

(56) Entgegenhaltungen:
- WO-A1-2005/105536
- DE-A1-102007 051 126
- DE-A1-102009 020 428

## Beschreibung

Die Erfindung betrifft ein Schienenfahrzeug mit wenigstens einer Sensoreinheit zur Erfassung zumindest einer Kenngröße, welche für eine von einem Fahrzeugführer steuerbare Fahrzeugeigendynamik repräsentativ ist.

Heutige Schienenfahrzeuge sind mit Sensoren ausgestattet, welche Informationen über die Eigendynamik des Fahrzeugs, wie insbesondere Informationen über eine Fahrgeschwindigkeit, eine Leistungsaufnahme, einen Radschlupf, eine Motordrehzahl, einen Bremsdruck, einen Gleitschutz usw. liefern.

Das DE 10 2007 051 126 A1 beschreibt ein Verfahren zum Bestimmen der Restlebensdauer einer Komponente eines auf wenigstens einem vorgegebenen Streckenabschnitt eines Streckennetzes betriebenen Schienenfahrzeugs sowie ein System zum Bestimmen der Restlebensdauer einer Fahrzeugkomponente. Eine Datenverarbeitungseinrichtung ist dazu ausgebildet, Restlebensdauerdaten zu ermitteln, welche für die Restlebensdauer einer in Betrieb durch die Wechselwirkung zwischen dem Fahrzeug und dem Streckenabschnitt mechanisch beanspruchten Fahrzeugkomponente des Fahrzeugs nach einem Nutzungsintervall des wenigstens einen Streckenabschnitts repräsentativ sind. Das System umfasst wenigstens ein Messfahrzeug (bspw. das Fahrzeug selbst und/oder ein entsprechendes Vergleichsfahrzeug) mit einer mit der Datenverarbeitungseinrichtung verbindbaren Messeinrichtung. Die Messeinrichtung ist dann dazu ausgebildet, für die Beanspruchung der Fahrzeugkomponente repräsentative Messungen an dem Messfahrzeug während wenigstens eines Durchfahrens des wenigstens eines Streckenabschnitts vorzunehmen.

Der Erfindung liegt die Aufgabe zugrunde, ein Schienenfahrzeug bereit zu stellen, bei welchem eine vorteilhafte, während der Fahrt zur Verfügung stehende und auf der Basis der erfassten Kenngröße beruhende Funktionalität erreicht werden kann.

Hierzu wird vorgeschlagen, dass das Schienenfahrzeug eine Auswerteinheit aufweist, die zur Ermittlung - während einer Fahrphase - einer Verschleißkenngröße mittels einer Auswertung auf der Basis der zumindest einen Kenngröße vorgesehen ist. Hierdurch kann ein Verschleiß vorteilhaft auf der Grundlage von aktuellen Parametern der Fahrzeugeigendynamik ermittelt werden.

Unter einer "Fahrzeugeigendynamik" soll insbesondere ein Satz von Parametern verstanden werden, die internen Fahrzeugkomponenten zugeordnet sind und deren Werte von einem aktuellen Fahrbetrieb des Schienenfahrzeugs abhängen. Ein Parameter der Fahrzeugeigendynamik ist vorzugsweise ein Parameter aus der Gruppe: Motordrehzahl, radbezogene Drehzahl, Geschwindigkeit relativ zum Gleis, elektrische Leistung, Bremszustand, Bremsdruck, Verzögerung, Masse. Die Sensoreinheit weist zumindest einen Sensor auf, der zur Erfassung einer Kenngröße für einen Parameter der Fahrzeugeigendynamik vorgesehen ist. Die für diesen Parameter repräsentative Kenngröße kann dem Parameter selbst entsprechen oder der Parameter kann aus der Kenngröße eindeutig hergeleitet werden. Die Kenngröße kann abhängig von der Ausbildung des Sensors als elektrische Spannung, elektrischer Strom, Temperatur, Frequenz und/oder als eine weitere, dem Fachmann als sinnvoll erscheinende physikalische Größe ausgebildet sein.

Die Fahrzeugeigendynamik und daher die diese charakterisierenden Parameter sind durch den Fahrzeugführer steuerbar, indem dieser z.B. eine bestimmte Traktionsstufe einstellt, eine bestimmte Bremsstufe anlegt, eine bestimmte Geschwindigkeit aufrechterhält, das Fahrzeug für eine bestimmte Streckenlänge in einem Ausrollbetrieb steuert usw.

Unter einer "Verschleißkenngröße" soll eine Kenngröße verstanden werden, die für einen Verschleißparameter repräsentativ ist. Sie kann insbesondere für einen Abnutzungsgrad repräsentativ sein. Sie kann dem Verschleißparameter entsprechen oder dieser kann aus der Kenngröße eindeutig herleitbar sein.

Dadurch, dass die Verschleißkenngröße auf der Grundlage einer aktuellen Kenngröße für die Fahrzeugeigendynamik ermittelt wird, kann sie in Bezug auf einen vorteilhaften Aspekt der Erfindung zum Erreichen einer schonenden Fahrweise herangezogen werden. Hierzu wird vorgeschlagen, dass das Schienenfahrzeug eine Ausgabeeinheit aufweist, die dazu vorgesehen ist, eine Information auf der Basis der Verschleißkenngröße an den Fahrzeugführer auszugeben. Zur Ausgabe der Information steht zweckmäßigerweise die Ausgabeeinheit, insbesondere eine Steuerung der Ausgabeeinheit in Wirkverbindung mit der Auswerteeinheit. Die Steuerung bereitet vorzugsweise die Verschleißkenngröße derart auf, dass sie von einem Ausgabeelement, z.B. einem optischen Anzeigeelement der Ausgabeeinheit ausgegeben werden kann. Der Fahrzeugführer kann hiermit während der Fahrphase über einen Verschleiß informiert werden, der mit der von ihm gesteuerten Fahrzeugeigendynamik zusammenhängt. Hierdurch wird dem Fahrzeugführer die Möglichkeit gegeben, die Fahrzeugeigendynamik derart anzupassen, dass der Verschleiß vermindert wird. Die Verschleißkenngröße ist ein für eine bestimmte Zeitspanne bzw. für einen bestimmten, zu befahrenden Streckenabschnitt prognostizierter Verschleißparameter, sodass der Fahrzeugführer über die Auswirkung der eingestellten Fahrzeugeigendynamik bezüglich eines noch zu befahrenden Streckenabschnitts informiert werden kann.

Insbesondere kann die Ermittlung der Verschleißkenngröße in Bezug auf einen Verschleiß einer genutzten Infrastruktur erfolgen, wenn die Auswerteeinheit zumindest ein Auswertemodul aufweist, welches während einer Fahrphase auf der Basis der erfassten Kenngröße eine Verschleißkenngröße für das Gleis ermittelt. Dem Gleis gehören insbesondere Komponenten des Oberbaus, wie insbesondere Fahrschienen, Befestigungen, Schwellen, Schotter usw.

Alternativ oder zusätzlich weist die Auswerteeinheit zumindest ein Auswertemodul auf, welches während einer Fahrphase auf der Basis der erfassten Kenngröße eine Verschleißkenngröße für zumindest eine Fahrzeugkomponente ermittelt. Beispielsweise kann eine radbezogene Verschleißkenngröße ermittelt werden. Dabei kann diese Kenngröße für den Verschleiß eines einzelnen Radsatzes, für den Verschleiß sämtlicher angetriebener Radsätze oder für den Verschleiß sämtlicher Radsätze des Schienenfahrzeugs repräsentativ sein.

Heutzutage werden zur Abschätzung von Infrastrukturkosten Simulationen durchgeführt. Die durch die Simulationen gewonnenen Ergebnisse werden zur Kalkulation eines belastungsabhängigen Trassenentgelts herangezogen, welcher von einem Streckenbetreiber für die Nutzung einer Strecke verlangt wird. Der Durchführung der Simulationen liegen Erfahrungswerte zugrunde.

Bezüglich eines weiteren vorteilhaften Aspekts der Erfindung kann die ermittelte Verschleißkenngröße dazu dienen, eine Einschätzung eines durch eine absolvierte Fahrt tatsächlich verursachten Verschleißes durchzuführen. Hierzu wird vorgeschlagen, dass das Schienenfahrzeug eine Aufzeichnungseinheit zur Aufzeichnung der ermittelten Verschleißkenngröße aufweist. Dies bietet - gegenüber herkömmlichen Abschätzungen mittels Simulationen auf der Basis von Erfahrungswerten und Beobachtungen - den Vorteil, dass eine Planung von Instandhaltungsarbeiten und/oder eine Berechnung von Infrastrukturkosten auf der Basis einer genaueren Einschätzung eines tatsächlichen Verschleißes erfolgen können. Falls eine Verschleißkenngröße für das Gleis ermittelt und aufgezeichnet wird, kann diese zur Kalkulation eines verschleißabhängigen Trassenentgelts herangezogen werden.

Alternativ oder zusätzlich zu einer Aufzeichnung der Verschleißkenngröße kann diese über eine Schnittstelle des Schienenfahrzeugs an ein landseitiges System übermittelt werden.

Gemäß einer vorteilhaften Ausführung der Erfindung ist die zumindest eine, von der Sensoreinheit erfassbare Kenngröße eine Größe aus der Gruppe Motordrehzahl, radbezogene Drehzahl, Geschwindigkeitskenngröße, motorbezogene Leistungskenngröße, Bremszustandskenngröße, Verzögerungskenngröße, radbezogene Lastkenngröße.

Es kann eine besonders effiziente Auswertung der Verschleißkenngröße erfolgen, wenn die Auswerteeinheit zu einer Ermittlung dieser in Echtzeit vorgesehen ist. Hierunter soll insbesondere verstanden werden, dass zwei aufeinander folgende Ermittlungsvorgänge durch eine Zeitspannung von maximal 10 s, bevorzugt maximal 5s getrennt sind. Besonders bevorzugt ist eine kontinuierliche Ermittlung der Verschleißkenngröße.

Alternativ wird - um eine kleine Belastung einer Recheneinheit und/oder eines Kommunikationsbus des Schienenfahrzeugs zu erreichen - vorgeschlagen, dass die Auswerteeinheit zu einer periodischen Ermittlung der Verschleißkenngröße vorgesehen ist. Dies eignet sich insbesondere für ein Schienenfahrzeug, das überwiegend für einen Langstreckeneinsatz vorgesehen ist. Die Periode kann dabei über 30 s, insbesondere über eine Minute, jedoch bevorzugt maximal 5 Minuten betragen.

Des Weiteren wird vorgeschlagen, dass das Schienenfahrzeug eine Steuereinheit aufweist, die dazu vorgesehen ist, eine Ausgabe der Information und/oder eine Aufzeichnung der Verschleißkenngröße bei Über- oder Unterschreiten eines voreingestellten Schwellwerts der Verschleißkenngröße auszulösen. Dadurch kann bei einer Ausgabe der Information die Aufmerksamkeit des Fahrzeugführers gezielter angeregt werden. Bei einer Aufzeichnung der Verschleißkenngröße kann ein geringer Speicheraufwand erreicht werden.

In diesem Zusammenhang wird vorgeschlagen, dass der Schwellwert zur Ausgabe bzw. zur Aufzeichnung mittels einer Einstelleinheit einstellbar ist, wodurch eine hohe Flexibilität in der Anwendung der vorgeschlagenen Funktionalität erreicht werden kann. Ein Triggern der Ausgabe bzw. der Aufzeichnung kann vorteilhaft an aktuellen Randbedingungen einer Fahrt angepasst werden.

Die von der Auswerteeinheit ermittelte Verschleißkenngröße kann alternativ oder zusätzlich zu einer Ausgabe bzw. Aufzeichnung außerdem einer Steuereinheit des Schienenfahrzeugs, wie insbesondere einer Antriebssteuereinheit, einer Bremssteuereinheit und/oder einer zentralen Zugsteuereinheit übermittelt werden und in dieser bzw. diesen weiter verarbeitet werden.

Ferner geht die Erfindung aus von einem Verfahren zur Ermittlung einer Verschleißkenngröße bei einem Schienenfahrzeug.

Es wird vorgeschlagen, dass während einer Fahrphase zumindest eine Kenngröße erfasst wird, die für eine von einem Fahrzeugführer steuerbare Fahrzeugeigendynamik repräsentativ ist und eine Verschleißkenngröße auf der Basis der zumindest einen Kenngröße während der Fahrphase ermittelt wird. Zu den vorteilhaften Wirkungen des vorgeschlagenen Verfahrens wird auf die Beschreibung des erfindungsgemäßen Schienenfahrzeugs verwiesen.

Es wird ein Ausführungsbeispiel der Erfindung anhand der Zeichnungen erläutert. Es zeigen:
- Figur 1:: ein Schienenfahrzeug mit Sensoreinheiten und einer Auswerteeinheit, in einer schematischen Seitenansicht und
- Figur 2:: eine Schaltung mit den Sensoreinheiten, der Auswerteeinheit, Ausgabeeinheiten und einer Aufzeichnungseinheit.

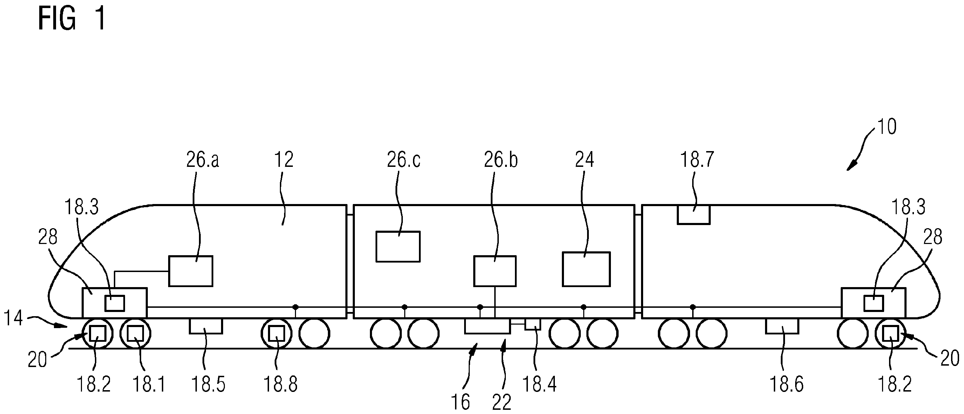

Figur 1 zeigt ein Schienenfahrzeug 10 in einer schematischen Seitenansicht. Das Schienenfahrzeug 10 ist als ein Verband von mehreren Wagen 12 ausgebildet, die miteinander gekoppelt sind. Es ist mit zumindest einer Antriebseinheit 14 und einer Bremseinheit 16 ausgestattet und für einen autarken Betrieb geeignet. In der fachmännischen Sprache wird das Schienenfahrzeug 10 "Triebzug" genannt. Das Schienenfahrzeug 10 kann mit weiteren, gattungsgemäßen Schienenfahrzeugen zur Bildung einer Zugeinheit gekoppelt werden. Die Ausbildung des Schienenfahrzeugs 10 als einzelner Triebwagen oder als Lokomotive ist ebenfalls denkbar. Das Schienenfahrzeug 10 kann eine Energie von einer streckenseitigen Stromversorgung beziehen und/oder es kann mit einem mittels Treibstoff betreibbaren Antriebsmotor und/oder Generator ausgestattet sein.

Das Schienenfahrzeug 10 weist Sensoreinheiten 18.1 bis 18.8 auf, die jeweils zur Erfassung von zumindest einer Kenngröße dienen, welche für eine von einem Fahrzeugführer steuerbare Fahrzeugeigendynamik repräsentativ ist.

Eine erste Sensoreinheit 18.1 ist als Drehzahlsensor ausgebildet, der eine radbezogene Drehzahl erfasst. Dabei kann es sich um eine Rad- oder Radsatzdrehzahl handeln. Eine zweite Sensoreinheit 18.2 ist in der Antriebseinheit 14 angeordnet und dient zur Erfassung einer Motordrehzahl. Eine weitere Sensoreinheit 18.3 wird zum Zweck einer Erfassung einer motorbezogenen Leistungskenngröße eingesetzt. Diese Kenngröße kann insbesondere der Leistung entsprechen, die in einem Traktionsbetrieb von zumindest einem Motor 20 der Antriebseinheit 14 bezogen wird bzw. in einem elektrischen Bremsbetrieb vom Motor 20 abgegeben wird.

In der betrachteten Ausführung weist die Antriebseinheit 14 zwei elektrischen Motoren 20 auf, die jeweils in einem unterschiedlichen Triebdrehgestell angeordnet sind. Die Triebdrehgestelle können mit jeweils zwei Motoren 20 ausgestattet sein. Im dargestellten Ausführungsbeispiel sind für jeden Motor 20 jeweils eine Sensoreinheit 18.2 und eine Sensoreinheit 18.3 vorgesehen. Die motorbezogene Leistungskenngröße wird daher für jeden einzelnen Motor 20 erfasst. Alternativ kann das Schienenfahrzeug 10 eine Sensoreinheit 18.3 aufweisen, die eine motorbezogene Leistungskenngröße für den gesamten Motorsatz oder - bei einer Ausführung von Triebdrehgestellen mit zwei Motoren 20 - für beide Drehgestellmotoren erfasst.

Eine Sensoreinheit 18.4 ist einer pneumatischen Bremsvorrichtung 22 der Bremseinheit 16 zugeordnet und dient zur Erfassung einer Bremszustandskenngröße, wie insbesondere eines Bremsdrucks.

Zur Erfassung einer Verzögerungskenngröße ist eine Sensoreinheit 18.5 vorgesehen, die als Beschleunigungssensor ausgebildet ist. Eine Geschwindigkeitskenngröße, die für die Geschwindigkeit des Schienenfahrzeugs 10 relativ zum Gleis repräsentativ ist, kann von einer erfassten Drehzahl, von einer als Inertialmesseinheit ausgebildeten Sensoreinheit 18.6 und/oder von einer als Ortungseinheit, insbesondere als GPS-Empfänger ausgeführten Sensoreinheit 18.7 ermittelt werden. Eine Erfassung einer Verzögerungskenngröße kann alternativ oder zusätzlich mittels der Sensoreinheit 18.6 erfolgen.

Ferner ist eine Sensoreinheit 18.8 vorgesehen, die eine radbezogene Lastkenngröße erfasst. Es ist in der Figur 1 der Übersichtlichkeit halber nur eine Sensoreinheit 18.8 dargestellt, vorzugsweise ist jedoch zumindest eine Sensoreinheit 18.8 pro Drehgestell vorgesehen. Beispielsweise kann die Sensoreinheit 18.8 mit einer Federungseinheit des entsprechenden Drehgestells zusammenwirken. Aus der erfassten Kenngröße kann eine von der aktuellen Last, insbesondere von der aktuellen Anzahl von Fahrgästen abhängige Masse und/oder eine auf die zugeordneten Radsätze übertragene Last hergeleitet werden.

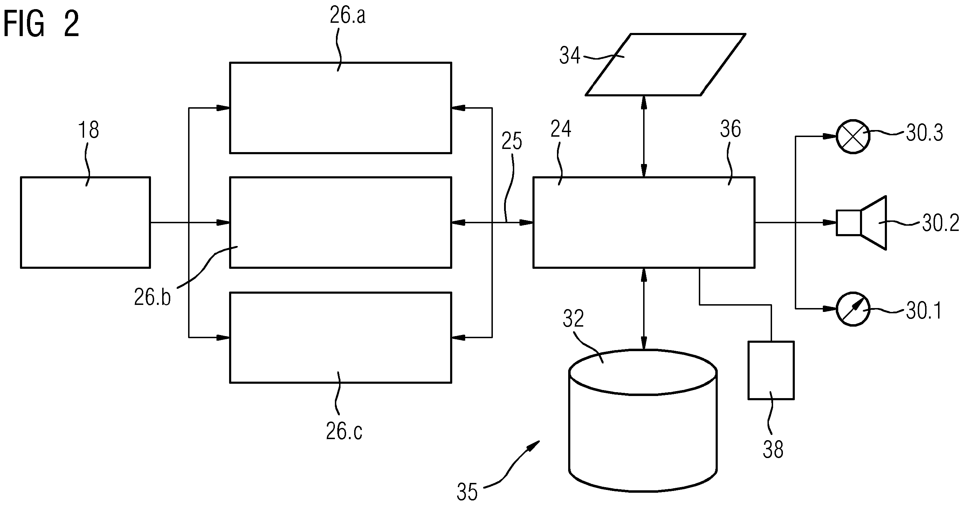

Die oben genannten Kenngrößen werden auf eine Auswerteeinheit 24 gegeben, die zur Ausführung eines Verschleißberechnungsalgorithmus vorgesehen ist. Dies ist in der schematischen Darstellung in Figur 2 gezeigt. In der betrachteten Ausführung werden die von den Sensoreinheiten 18.1 bis 18.8 erfassten Kenngrößen jeweils einer oder mehreren zugeordneten Steuereinheiten 26.a, 26.b, 26.c des Schienenfahrzeugs 10 übermittelt. Der Satz von Sensoreinheiten 18.1 bis 18.8 wird als zusammenfassende Einheit 18 in Figur 2 dargestellt.

Die Steuereinheit 26.a entspricht einer Antriebssteuereinheit, die zur Steuerung der Antriebseinheit 14 vorgesehen ist. In der fachmännischen Sprache ist die Steuereinheit 26.a auch "Antriebssteuergerät" (oder "ASG") genannt. Insbesondere dient diese dazu, in einem Traktionsmodus eine Leistungsversorgungseinheit 28 zu steuern, die dazu vorgesehen ist, einen bzw. mehrere Motoren 20 der Antriebseinheit 14 mit elektrischer Leistung zu versorgen (siehe Figur 1). Beispielweise ist die Leistungsversorgungseinheit 28 als Traktionsstromrichter ausgebildet.

Die Steuereinheit 26.b. bildet eine Bremssteuereinheit zur Steuerung der Bremseinheit 16 und ist unter dem Begriff "Bremssteuergerät" (oder "BSG") bekannt. Diese steuert insbesondere die pneumatische Bremsvorrichtung 22 der Bremseinheit 16 (siehe Figur 1).

Die dritte Steuereinheit 26.c entspricht der zentralen Steuereinheit des Schienenfahrzeugs 10, auch "zentrales Steuergerät" (oder "ZSG") genannt. Diese zentrale Steuerung ist typischerweise dezentralen, verschiedenen Subsystemen des Schienenfahrzeugs 10 übergeordnet, wobei sie insbesondere die Funktion eines "Masters" übernehmen kann.

Die erfassten Kenngrößen werden in den zugeordneten Steuereinheiten 26 für eine algorithmische Verarbeitung in der Auswerteeinheit 24 aufbereitet. Insbesondere werden die durch die Sensoreinheiten 18.1 (radbezogene Drehzahl), 18.2 (Motordrehzahl) und 18.3 (Leistungskenngröße) in der Steuereinheit 26.a aufbereitet. Die Steuereinheit 26.b bereitet insbesondere die von der Sensoreinheit 18.4 erfasste Kenngröße (Bremszustandskenngröße) auf. Die Kenngrößen, die von den Sensoreinheiten 18.5 (Verzögerungskenngröße), 18.6 (Inertialkenngrößen), 18.7 (Ortungskenngröße) und 18.8 (radbezogene Lastkenngröße) werden vorzugsweise in der Steuereinheit 26.c aufbereitet.

In einem alternativen Ausführungsbeispiel ist denkbar, dass eine oder mehrere erfasste Kenngrößen direkt der Auswerteinheit 24 übermittelt werden.

Die ggf. aufbereiteten Kenngrößen erreichen die Auswerteeinheit 24 über eine Schnittstelle 25. Die Auswerteinheit 24 ist in der Figur als eigenständige Baueinheit, insbesondere von den oben genannten Steuereinheiten 26 getrennt ausgeführt. Gemäß einer weiteren Ausführungsvariante ist denkbar, dass die Auswerteeinheit 24 zumindest als Teil von zumindest einer der Steuereinheiten 26 ausgebildet ist. Der Verschleißberechnungsalgorithmus kann dabei als ein Programmmodul der Steuereinheit 26.a, 26.b und/oder 26.c ausgeführt werden.

Der Verschleißberechnungsalgorithmus ist dazu vorgesehen, auf der Grundlage von zumindest einer der Kenngrößen, vorzugsweise auf der Grundlage von mehreren Kenngrößen eine Verschleißkenngröße zu ermitteln. Dies kann insbesondere mittels eines Beobachtermodells, welches voreingestellte Verschleißkennwerte heranzieht, erfolgen. Die Verschleißkennwerte können Elemente einer Datenbank sein, in welcher sie mit Werten von Parametern der Fahrzeugeigendynamik, für welche die Kenngrößen von den Sensoreinheiten 18 erfasst werden, verknüpft sind.

Eine erste Funktion der Auswerteeinheit 24 besteht zumindest darin, auf der Basis von während einer Fahrphase erfassten Kenngrößen zumindest eine Verschleißkenngröße für das Gleis, insbesondere für die Fahrschienen, zu ermitteln. Gemäß einer weiteren Funktion wird auf der Basis von während einer Fahrphase erfassten Kenngrößen zumindest eine Verschleißkenngröße für Schienenfahrzeugkomponenten, insbesondere Radsätze, ermittelt.

Eine ermittelte Verschleißkenngröße wird, insbesondere nach einer Aufbereitung, in einem Ausgabemodus auf eine Ausgabeeinheit 30.1 zur Mitteilung einer Information an den Fahrzeugführer gegeben. Die Ausgabeeinheit 30.1 entspricht insbesondere einem Display oder einem Anzeigeinstrument, welches im Führerraum angeordnet ist. Beispielsweise kann eine radsatzbezogene Verschleißkenngröße derart aufbereitet werden, dass eine Information über einen Radsatzabnutzungsgrad ausgegeben wird. Alternativ oder zusätzlich kann eine Ausgabeeinheit 30.2 zur akustischen Ausgabe der Information vorgesehen sein.

Beispielsweise kann mittels des Verschleißberechnungsalgorithmus ein Radsatzabnutzungsgrad abhängig von der aktuellen Geschwindigkeit, der aktuellen Beschleunigung und der aktuellen, von der Masse abhängigen Radsatzlast eingeschätzt werden. Es kann insbesondere ein Abnutzungsgrad prognostiziert werden, der erreicht werden wird, falls die Fahrzeugeigendynamik für eine bestimmte Zeitspanne bzw. entlang eines bestimmten Streckenabschnitts aufrechterhalten wird. Die Berechnung erfolgt auch bezüglich eines Abnutzungsgrads des Gleises. Auf der Basis der dem Fahrzeugführer ausgegebenen Information kann dieser die Fahrzeugeigendynamik derart steuern, dass die entsprechenden Abnutzungen vermindert werden.

Alternativ oder zusätzlich kann die Verschleißkenngröße, ggf. nach Aufbereitung, in einem Aufzeichnungsmodus zusammen mit einem Zeitstempel zur späteren Auswertung in einer Speichereinheit 32 gespeichert werden, die über eine Schnittstelle 34 direkt oder indirekt abgelesen werden kann. Die Speichereinheit 32 in Zusammenwirkung mit der Auswerteeinheit dient - durch die Verknüpfung der Verschleißkenngröße mit einem Zeitstempel- als Aufzeichnungseinheit 35 zur Aufzeichnung der Verschleißkenngröße. Der Inhalt der Speichereinheit 32 kann nach einer Fahrt abgerufen und ausgewertet werden, insbesondere zur Berechnung einer Einschätzung eines tatsächlich verursachten Verschleißes. Bezüglich einer Abnutzung von Schienenfahrzeugkomponenten kann die gewonnene Information zu einer effizienten Planung der Fahrzeuginstandhaltung genutzt werden. Hinsichtlich einer Abnutzung der befahrenen Strecke kann ein Trassenentgelt auf der Basis dieser Einschätzung des durch eine absolvierte Fahrt tatsächlich verursachten Verschleißes am Gleis berechnet werden.

Die Ermittlung einer Verschleißkenngröße erfolgt vorteilhafterweise in Echtzeit. Hierzu kann eine aus der Verschleißkenngröße hergeleitete Information permanent, wie z.B. mittels eines Anzeigeinstruments der Ausgabeeinheit 30.1 angezeigt werden. Alternativ ist denkbar, dass die Auswerteeinheit 24 zu einer periodischen Ermittlung der Verschleißkenngröße vorgesehen ist. Die gewählte Periode entspricht dabei einem hinreichend kurzen Zeitraum von maximal 5 Minuten.

In einer weiteren Ausführungsform kann die Ausgabe mittels einer Ausgabeeinheit 30.3 erst dann erfolgen, wenn eine ermittelte Verschleißkenngröße bzw. eine auf der Basis dieser aufbereitete Kenngröße einen voreingestellten Schwellwert erreicht. In diesem Fall ist von Vorteil, wenn die Information nicht permanent angezeigt wird, sondern ad hoc ausgegeben wird, wie z.B. durch ein akustisches Signal und/oder durch Einblenden einer Information in einem Display der Ausgabeeinheit 30.3. Dies erfolgt mittels einer Steuereinheit 36 zur Steuerung der Ausgabeeinheit 30.3. Im betrachteten Ausführungsbeispiel ist die Steuereinheit 36 von der Auswerteeinheit 24 gebildet, wobei eine von dieser getrennte Ausführung der Steuereinheit 36 denkbar ist.

Der Schwellwert kann von einer aktuellen Fahrplansituation oder einer aktuellen Last abhängen. Es ist daher vorteilhafterweise eine Einstelleinheit 38 zur Einstellung des Schwellwerts vorgesehen.

## Patentansprüche

1. Schienenfahrzeug mit wenigstens einer Sensoreinheit (18.1 -18.8) zur Erfassung zumindest einer Kenngröße, welche für eine von einem Fahrzeugführer steuerbare Fahrzeugeigendynamik repräsentativ ist,
**gekennzeichnet durch**
eine Auswerteinheit (24), die zur Ermittlung einer Verschleißkenngröße mittels einer Auswertung auf der Basis der zumindest einen Kenngröße während einer Fahrphase vorgesehen ist und
eine Ausgabeeinheit (30.1 - 30.3), die dazu vorgesehen ist, eine Information auf der Basis der Verschleißkenngröße an den Fahrzeugführer auszugeben,
wobei die Verschleißkenngröße ein für eine bestimmte Zeitspanne oder für einen bestimmten, zu befahrenden Streckenabschnitt prognostizierter Verschleißparameter ist.

2. Schienenfahrzeug nach Anspruch 1,
**dadurch gekennzeichnet, dass**
die Auswerteeinheit (24) zumindest ein Auswertemodul aufweist, welches während einer Fahrphase auf der Basis der erfassten Kenngröße eine Verschleißkenngröße für das Gleis ermittelt.

3. Schienenfahrzeug nach Anspruch 1 oder 2,
**dadurch gekennzeichnet, dass**
die Auswerteeinheit (24) zumindest ein Auswertemodul aufweist, welches während einer Fahrphase auf der Basis der erfassten Kenngröße eine Verschleißkenngröße für zumindest eine Fahrzeugkomponente ermittelt.

4. Schienenfahrzeug nach einem der vorhergehenden Ansprüche,
**gekennzeichnet durch**
eine Aufzeichnungseinheit (35) zur Aufzeichnung der ermittelten Verschleißkenngröße.

5. Schienenfahrzeug nach einem der vorhergehenden Ansprüche,
**dadurch gekennzeichnet, dass**
die Kenngröße als Motordrehzahl, radbezogene Drehzahl, Geschwindigkeitskenngröße, motorbezogene Leistungskenngröße, Bremszustandskenngröße, Verzögerungskenngröße oder radbezogene Lastkenngröße ausgebildet ist.

6. Schienenfahrzeug nach einem der vorhergehenden Ansprüche,
**dadurch gekennzeichnet, dass**
die Auswerteeinheit (24) zu einer Ermittlung der Verschleißkenngröße in Echtzeit vorgesehen ist.

7. Schienenfahrzeug nach einem der Ansprüche 1 bis 5,
**dadurch gekennzeichnet, dass**
die Auswerteeinheit (24) zu einer periodischen Ermittlung der Verschleißkenngröße vorgesehen ist.

8. Schienenfahrzeug zumindest nach Anspruch 1 oder 2,
**gekennzeichnet durch**
eine Steuereinheit (36), die dazu vorgesehen ist, eine Ausgabe der Information und/oder eine Aufzeichnung der Verschleißkenngröße bei Über- oder Unterschreiten eines voreingestellten Schwellwerts der Verschleißkenngröße auszulösen.

9. Schienenfahrzeug nach Anspruch 8,
**gekennzeichnet durch**
eine Einstelleinheit (38) zur Einstellung des Schwellwerts.

10. Verfahren zur Ermittlung einer Verschleißkenngröße bei einem Schienenfahrzeug (10), bei welchem
- während einer Fahrphase zumindest eine Kenngröße erfasst wird, die für eine von einem Fahrzeugführer steuerbare Fahrzeugeigendynamik repräsentativ ist,
- eine Verschleißkenngröße auf der Basis der zumindest einen Kenngröße während der Fahrphase ermittelt wird,
- eine Information auf der Basis der Verschleißkenngröße während der Fahrphase an den Fahrzeugführer ausgegeben wird und
- der Fahrzeugführer auf der Grundlage der Information bei Bedarf die Fahrzeugeigendynamik anpasst,
wobei die Verschleißkenngröße ein für einen bestimmten, zu befahrenden Streckenabschnitt prognostizierter Verschleißparameter ist.

11. Verfahren nach Anspruch 10,
**dadurch gekennzeichnet, dass**
die ermittelte Verschleißkenngröße während der Fahrphase in einer Speichereinheit (32) aufgezeichnet wird.

12. Verfahren nach Anspruch 11,
**dadurch gekennzeichnet, dass**
ein Trassenentgelt auf der Grundlage der aufgezeichneten Daten ermittelt wird.

13. Verfahren nach Anspruch 10 oder 11,
**dadurch gekennzeichnet, dass**
- ein Schwellwert der Verschleißkenngröße voreingestellt ist und
- die Ausgabe der Information bzw. die Aufzeichnung der Verschleißkenngröße bei Über- oder Unterschreiten des Schwellwerts ausgelöst wird.

## Claims

1. Rail vehicle comprising at least one sensor unit (18.1 - 18.8) for sensing at least one variable that is characteristic of inherent vehicle dynamics which can be controlled by the driver of the vehicle,
**characterised by**
an evaluation unit (24) provided for determining a characteristic wear variable by performing an analysis on the basis of the at least one characteristic variable during a vehicle movement phase and
an output unit (30.1 - 30.3) provided for the output of information based on the characteristic wear variable to the driver of the vehicle,
wherein the characteristic wear variable is a predicted wear parameter for a particular period of time and/or for a particular track section to be travelled.

2. Rail vehicle according to claim 1,
**characterised in that**
the evaluation unit (24) has at least one evaluation module which during a vehicle movement phase determines the characteristic wear variable for the track based on the sensed characteristic variable.

3. Rail vehicle according to claim 1 or 2,
**characterised in that**
the evaluation unit (24) has at least one evaluation model which determines a characteristic wear variable for at least one vehicle component during a vehicle movement phase based on the sensed characteristic variable.

4. Rail vehicle according to one of the preceding claims,
**characterised by**
a recording unit (35) for recording the determined characteristic wear variable.

5. Rail vehicle according to one of the preceding claims,
**characterised in that**
the characteristic variable is embodied as the engine speed, wheel-related revolutions per minute, characteristic speed variable, engine-related characteristic performance variable, characteristic braking condition variable, characteristic delay variable or wheel-related characteristic load variable.

6. Rail vehicle according to one of the preceding claims,
**characterised in that**
the evaluation unit (24) is provided for the determination of the characteristic wear variable in real time.

7. Rail vehicle according to one of claims 1 to 5,
**characterised in that**
the evaluation unit (24) is provided for the periodic determination of the characteristic wear variable.

8. Rail vehicle at least according to claim 1 or 2,
**characterised by**
a control unit (36) which is provided to trigger the output of information and/or recording of the characteristic wear variable when exceeding or falling short of a preset threshold value of the characteristic wear variable.

9. Rail vehicle according to claim 8,
**characterised by**
an adjustment unit (38) for the adjustment of the threshold value.

10. Method for determining a wear parameter in a rail vehicle (10), in which
- during a vehicle movement phase at least one characteristic variable is sensed which is characteristic of inherent vehicle dynamics that can be controlled by the driver of the vehicle and
- a characteristic wear variable is determined on the basis of the at least one characteristic variable during the vehicle movement phase,
- information based on the characteristic wear variable during the vehicle movement phase is output to the driver of the vehicle and
- based on the information, the driver of the vehicle adjusts the inherent vehicle dynamics if necessary wherein the characteristic wear variable is a predicted wear parameter for a particular track section to be travelled.

11. Method according to claim 10,
**characterised in that**
the determined characteristic wear variable is recorded in a storage unit (32) during the vehicle movement phase.

12. Method according to claim 11,
**characterised in that**
a route fee is determined on the basis of the recorded data.

13. Method according to claim 10 or 11,
**characterised in that**
- a threshold value of the characteristic wear variable is preset and
- the output of the information and/or the recording of the characteristic wear variable is triggered when exceeding or falling short of the threshold value.

## Revendications

1. Véhicule ferroviaire, ayant au moins une unité (18.1 à 18.8) de capteurs pour détecter au moins une grandeur caractéristique représentative d'une dynamique propre du véhicule pouvant être commandée par un conducteur du véhicule,
**caractérisé par**
une unité (24) d'évaluation, prévue pour déterminer une grandeur caractéristique d'usure au moyen d'une évaluation sur la base de la au moins une grandeur caractéristique pendant une phase de marche et
une unité (30.1 à 30.3) d'émission, prévue pour envoyer au conducteur du véhicule une information sur la base de la grandeur caractéristique d'usure,
la grandeur caractéristique d'usure étant un paramètre d'usure pronostiqué pour un laps de temps défini ou pour un tronçon de voie défini à parcourir.

2. Véhicule ferroviaire suivant la revendication 1,
**caractérisé en ce que**
l'unité (24) d'évaluation a au moins un module d'évaluation, qui détermine, pendant une phase de base, sur la base de la grandeur caractéristique détectée, une grandeur caractéristique d'usure de la voie ferrée.

3. Véhicule ferroviaire suivant la revendication 1 ou 2,
**caractérisé en ce que**
l'unité (24) d'évaluation a au moins un module d'évaluation, qui, pendant une phase de marche, détermine, sur la base de la grandeur caractéristique détectée, une grandeur caractéristique d'usure d'au moins un élément du véhicule.

4. Véhicule ferroviaire suivant l'une des revendications précédentes,
**caractérisé par**
une unité (35) d'enregistrement pour enregistrer la grandeur caractéristique d'usure déterminée.

5. Véhicule ferroviaire suivant l'une des revendications précédentes,
**caractérisé en ce que**
la grandeur caractéristique est constituée sous la forme d'une vitesse de rotation d'un moteur, d'une vitesse de rotation rapportée à une roue, d'une grandeur caractéristique de vitesse, d'une grandeur caractéristique de puissance rapportée au moteur, d'une grandeur caractéristique d'état de frein, d'une grandeur caractéristique de décélération ou d'une grandeur caractéristique de charge rapportée à une roue.

6. Véhicule ferroviaire suivant l'une des revendications précédentes,
**caractérisé en ce que**
l'unité (24) d'évaluation est prévue pour déterminer la grandeur caractéristique d'usure en temps réel.

7. Véhicule ferroviaire suivant l'une des revendications 1 à 5,
**caractérisé en ce que**
l'unité (24) d'évaluation est prévue pour déterminer périodiquement la grandeur caractéristique d'usure.

8. Véhicule ferroviaire au moins suivant la revendication 1 ou 2,
**caractérisé par**
une unité (36) de commande prévue pour déclencher une émission de l'information et/ou un enregistrement de la grandeur caractéristique d'usure, si l'on passe au-dessus ou en dessous d'une valeur de seuil réglée à l'avance de la grandeur caractéristique d'usure.

9. Véhicule ferroviaire suivant la revendication 8,
**caractérisé par**
une unité (38) de réglage pour régler la valeur de seuil.

10. Procédé de détermination d'une grandeur caractéristique d'usure pour un véhicule (10) ferroviaire, dans lequel
- pendant une phase de marche, on détecte au moins une grandeur caractéristique représentative d'une dynamique propre du véhicule pouvant être commandée par le conducteur du véhicule,
- on détermine, pendant la phase de marche, une grandeur caractéristique d'usure sur la base de la au moins une grandeur caractéristique,
- on envoie, au conducteur du véhicule pendant la phase de marche, une information sur la base de la grandeur caractéristique d'usure et
- le conducteur du véhicule adapte la dynamique propre du véhicule suivant les besoins, sur la base de l'information, dans lequel la grandeur d'usure est un paramètre d'usure pronostiqué pour un tronçon de voie déterminé à parcourir.

11. Procédé suivant la revendication 10,
**caractérisé en ce que**
l'on enregistre, dans une unité (32) de mémoire, la grandeur caractéristique d'usure déterminée pendant la phase de marche.

12. Procédé suivant la revendication 11,
**caractérisé en ce que**
l'on détermine une taxe de tracé d'une ligne sur la base des données enregistrées.

13. Procédé suivant la revendication 10 ou 11,
**caractérisé en ce que**
- l'on règle une valeur de seuil de la grandeur caractéristique d'usure
et
- on déclenche l'émission d'information ou l'enregistrement de la grandeur caractéristique d'usure, lorsque l'on passe au-dessus ou en dessous de la valeur de seuil.
